# EUROPÄISCHE PATENTANMELDUNG

(11) **EP 0 685 319 A2**
(43) Veröffentlichungstag der Anmeldung: **06.12.1995**
(21) Anmeldenummer: 95106705.7
(22) Anmeldetag: 04.05.1995
(51) Int. Cl.: B29C 65/20

(54) **Verfahren und Vorrichtung zur Herstellung von rechteckigen Rahmen**

(30) Priorität: 11.05.1994 DE 4416634
(71) Anmelder: WILLI STÜRTZ MASCHINENBAU GmbH, D-53577 Neustadt (DE)
(72) Erfinder: Stürtz, Karl-Heinz, D-53577 Neustadt (DE)
(74) Vertreter: Kossobutzki, Walter, Dipl.-Ing.(FH)

(57) **Zusammenfassung**

Die Erfindung bezieht sich auf ein Verfahren zur Herstellung von rechteckigen Rahmen, beispielsweise Flügel- und Blendrahmen von Fenstern, aus Kunststoff, bei dem jeweils vier an den Stirnflächen unter Gehrung auf Länge zugeschnittene Kunststoffprofilstücke unter Verwendung von Schweißbeilagen von der Bedienungsseite aus in mindestens eine mit vier relativ gegeneinander bewegbaren Schweißköpfen (4a-4d) bestückte, senkrecht bzw. annähernd senkrecht arbeitende Schweißmaschine eingelegt, festgespannt, gleichzeitig an allen Gehrungsflächen erwärmt und dann unter Druck und Bildung von Schweißraupen zu einem geschlossenen Rahmen zusammengefügt werden und beidem anschließend der Rahmen nach dem Auseinanderfahren der Schweißköpfe aus der Einspannebene herausbewegt und an eine Transporteinrichtung (15) übergeben wird.

Um bei einem solchen Verfahren innerhalb kürzester Zeit nach dem Schweißen eines Rahmens, insbesondere eines Fensterrahmens, aus Kunststoffprofilstücken wieder neue Kunststoffprofilstücke zur Bildung des nächsten Rahmens in die Schweißmaschine einlegen zu können und damit die Zeit für die Herstellung eines geschweißten Rahmens zu reduzieren, wird der geschweißte Rahmen an der der Bedienungsseite abgewandten Seite der Schweißmaschine herausbewegt.

## Beschreibung

Die Erfindung bezieht sich auf ein Verfahren zur Herstellung von rechteckigen Rahmen, beispielsweise Flügel- und Blendrahmen von Fenstern, aus Kunststoff, bei dem jeweils vier an den Stirnflächen unter Gehrung auf Länge zugeschnittene Kunststoffprofilstücke unter Verwendung von Schweißbeilagen von der Bedienungsseite aus in mindestens eine mit vier relativ gegeneinander bewegbaren Schweißköpfen bestückte, senkrecht bzw. annähernd senkrecht arbeitende Schweißmaschine eingelegt, festgespannt, gleichzeitig an allen Gehrungsflächen erwärmt und dann unter Druck und Bildung von Schweißraupen zu einem geschlossenen Rahmen zusammengefügt werden und beidem anschließend der Rahmen nach dem Auseinanderfahren der Schweißköpfe aus der Einspannebene herausbewegt und an eine Transporteinrichtung übergeben wird sowie auf eine Vorrichtung zur Durchführung des Verfahrens.

Die Herstellung von rechteckigen Rahmen, beispielsweise der Flügel- und Blendrahmen von Fenstern, aus Kunststoff erfolgt in der Weise, daß vier an ihren beiden Stirnflächen unter Gehrung auf Länge zugeschnittene Kunststoffprofile unter Verwendung von Schweißbeilagen nacheinander in eine mit vier relativ gegeneinander bewegbaren Schweißköpfen bestückte, senkrecht bzw. annähernd senkrecht arbeitende Schweißmaschine eingelegt, ausgerichtet und festgespannt werden. Über vier plattenartige Heizvorrichtungen werden dann die Kunststoffprofilstücke an ihren einander zugewandten Gehrungsflächen auf eine Temperatur erwärmt, die so hoch ist, daß anschließend die Gehrungsflächen nach dem Entfernen der Heizvorrichtungen durch Gegeneinanderdrücken unter Bildung von Schweißraupen miteinander verschweißen. Nach einer vorgegebenen Abkühlzeit wird der geschweißte Fensterrahmen von der Bedienungsseite aus entnommen und an eine Putzmaschine übergeben, in der die Schweißraupen, zumindest im Bereich der Sichtflächen des Fensterrahmens, bearbeitet bzw. beseitigt werden. Der fertig geschweißte Fensterrahmen wird dabei in der senkrechten bzw. annähernd senkrechten Lage aus der Schweißmaschine übernommen und in dieser Lage an die nachgeordnete Putzmaschine übergeben.

Zur Übergabe der Fensterrahmen von einer Schweißmaschine an eine Putzmaschine ist aus dem DE-GM 92 07 639 eine Vorrichtung bekannt, die aus zwei mit Abstand übereinander angeordneten Greifern besteht. Mittels dieser Greifer wird der fertig geschweißte Fensterrahmen an seinem oberen und seinem unteren Kunststoffprofilstück von der Bedienungsseite aus erfaßt, aus der Schweißmaschine herausbewegt und anschließend in seiner Rahmenebene aus dem Bereich der Schweißmaschinen verfahren. Mittels der vorbekannten Greifvorrichtung wird dann der fertig geschweißte Fensterrahmen an eine seitlich neben der Schweißmaschine befindliche, vertikale bzw. annähernd vertikale Transporteinrichtung übergeben, von der der Fensterrahmen dann der Putzmaschine zugeführt wird.

Dieser Verfahrensablauf bringt es mit sich, daß während des Herausnehmens des Fensterrahmens aus der Schweißmaschine und des seitlichen Abtransportes die Bedienungsseite der Schweißmaschine durch die Greifvorrichtung blockiert ist, d.h., es können während dieser Zeit keine neuen Kunststoffprofilstücke zur Bildung eines neuen Fensterrahmens eingelegt werden. Dies wirkt sich nachteilig auf den Arbeitszyklus der Schweißmaschine aus. Dieser Nachteil kann bei einer Vorrichtung gemäß dem DE-GM 92 07 639 dadurch vermieden werden, daß auf einem Karussell mindestens zwei Vierkopf-Schweißmaschinen angeordnet sind, die wechselweise von der Greifvorrichtung bedient werden. Dies bedeutet, daß in der Stellung einer Vierkopf-Schweißmaschine, in der ein fertig geschweißter Fensterrahmen entnommen wird, die andere Vierkopf-Schweißmaschine bereits mit neuen Kunststoffprofilstücken belegt werden kann. Ein derartiges Karussell mit mindestens zwei Vierkopf-Schweißmaschinen ist jedoch mit einem verhältnismäßig hohen Herstellungs- bzw. Investitionsaufwand verbunden.

Der Erfindung liegt deshalb die Aufgabe zugrunde, ein Verfahren aufzuzeigen, mit dem es möglich ist, innerhalb kürzester Zeit nach dem Schweißen eines Rahmens, insbesondere eines Fensterrahmens, aus Kunststoffprofilstücken wieder neue Kunststoffprofilstücke zur Bildung des nächsten Rahmens in die Schweißmaschine einzulegen. Dadurch soll die Zeit für die Herstellung eines geschweißten Rahmens reduziert und die Anzahl der Zyklen der Schweißmaschine pro Zeiteinheit erhöht werden.

Zur Lösung dieser Aufgabe wird gemäß der Erfindung bei einem Verfahren der eingangs beschriebenen Gattung vorgeschlagen, daß der geschweißte Rahmen an der der Bedienungsseite abgewandten Seite der Schweißmaschine herausbewegt wird.

Durch ein solches Verfahren ist die Bedienungsseite der Schweißmaschine bei der Entnahme des Rahmens vollständig frei, so daß sofort nach dem Herausbewegen des geschweißten Rahmens aus der Schweißmaschine neue Kunststoffprofile in die Schweißmaschine eingelegt werden können. Durch ein solches Verfahren erhöht sich die Anzahl der pro Zeiteinheit geschweißten Rahmen nicht unbeträchtlich. Damit ist es möglich, die Leistung einer Schweißmaschine der Leistung einer nachgeordneten Putzmaschine stärker anzunähern. Die Bedienungsperson, die zwar noch für das Einlegen der Kunststoffprofilstücke erforderlich ist, ist jetzt besser ausgelastet, so daß die auf einen geschweißten Fensterrahmen entfallenden Lohnkosten reduziert werden.

Weitere Merkmale eines Verfahrens gemäß der Erfindung sowie einer Vorrichtung zur Durchführung des Verfahrens sind in den Ansprüchen 2-14 offenbart.

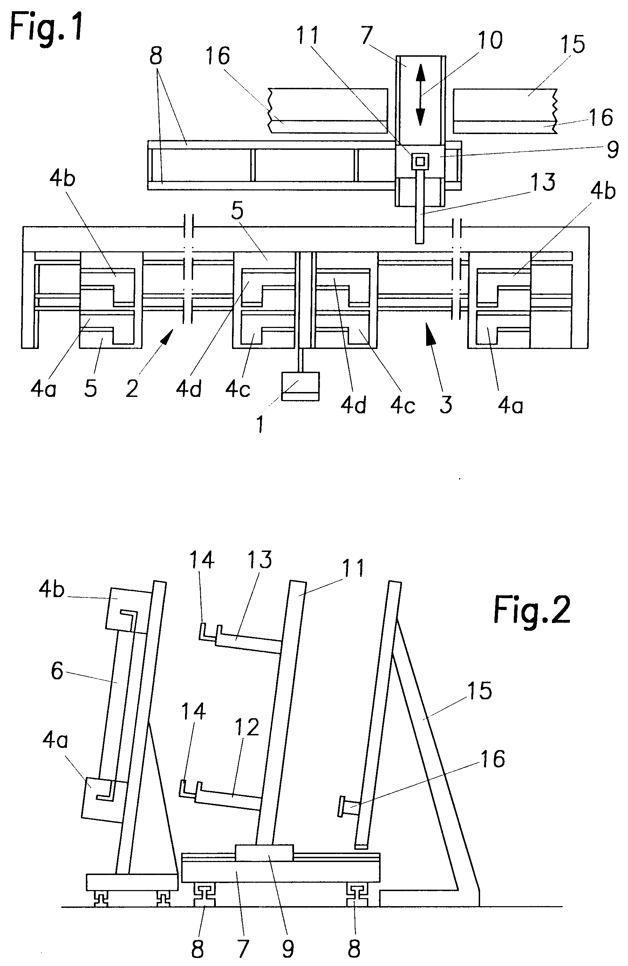

Die Erfindung wird nachfolgend anhand eines in einer Zeichnung in stark vereinfachter Weise dargestellten Ausführungsbeispieles näher erläutert. Dabei zeigen
- Fig. 1: eine Draufsicht auf eine Vorrichtung zur Durchführung des Verfahrens gemäß der Erfindung und
- Fig. 2: eine Seitenansicht von rechts der Fig. 1
In dieser Zeichnung ist in vereinfachter Weise ein Teil einer automatischen Produktionsanlage zur Herstellung der Flügel- und Blendrahmen von Fenstern aus Kunststoff gezeigt, die in vorteilhafter Weise von einem zentralen Computer gesteuert wird. Von diesem zentralen Computer ist in der Fig. 1 nur das Bedienungsfeld 1 angedeutet. Diese Produktionsanlage besteht im dargestellten Ausführungsbeispiel aus zwei direkt nebeneinander angeordneten Schweißmaschinen 2, 3, die jeweils mit vier relativ gegeneinander bewegbaren Schweißköpfen 4a-4d bestückt sind. Dabei werden jeweils zwei Schweißköpfe 4a, 4b und 4c, 4d von einem Schlitten 5 getragen, von denen ein Schlitten 5 ortsfest angeordnet sein kann, während der andere Schlitten auf horizontalen Führungen verschiebbar ist. Auf jedem Schlitten 5 ist jeweils der untere Schweißkopf 4a, 4c ortsfest angeordnet, während der obere Schweißkopf 4b, 4d heb- und senkbar gehalten ist. Über an sich bekannte, in der Zeichnung nicht dargestellte Antriebe können der bewegbare Schlitten 5 und die heb- und senkbaren Schweißköpfe 4b, 4d in ihre jeweilige Arbeitsposition bewegt werden.

Die jeweils übereinander befindlichen Schweißköpfe 4a, 4b bzw. 4c, 4d sind im dargestellten Ausführungsbeispiel schräg übereinander angeordnet, so daß der herzustellende Rahmen keine genau senkrechte, sondern eine beispielsweise um einen Winkel von 15° geneigte Lage einnimmt. Eine solche Lage stellt sicher, daß der Fensterrahmen nach dem Freigeben der Spannelemente nicht kippen kann. Dabei ist es grundsätzlich auch möglich, die Schweißköpfe 4a-4d so anzuordnen, daß der fertige Rahmen eine genau senkrechte Lage einnimmt. In einem solchen Fall muß jedoch eine besondere Kippsicherung vorgesehen werden.

Für die weitere Erläuterung des Verfahrens wird nun davon ausgegangen, daß die Schweißmaschine 2 leer ist, während sich in der Schweißmaschine 3 ein bereits geschweißter Fensterrahmen 6 zur Abkühlung befindet. Nachdem die Schweißköpfe 4a bis 4d der Schweißmaschine 2 in eine vorgegebene Lage gebracht wurden, werden die auf Länge und Gehrung zugeschnittenen Kunststoffprofilstücke in die Schweißköpfe 4a-4d eingelegt und festgespannt. Dabei weist jeder Schweißkopf 4a-4d sogenannte Schweißbeilagen auf, die dem Profilquerschnitt der Kunststoffprofilstücke angepaßt sind. Nach dem Festspannen der Kunststoffprofilstücke wird zwischen die einander zugewandten Gehrungsflächen der Kunststoffprofilstücke jeweils ein Heizschwert eingeführt und die Kunststoffprofilstücke durch die Schweißköpfe 4a-4d so gegeneinander bewegt, daß alle Gehrungsflächen der Kunststoffprofilstücke an den Heizschwertern zum Anliegen kommen und so stark erwärmt werden können, daß dieselben nach dem Entfernen der Heizschwerter und durch weiteres Gegeneinanderbewegen der Schweißköpfe 4a-4d durch Druck miteinander verschweißen, wobei sich eine Schweißnaht ausbildet.

Hinter den beiden Schweißmaschinen 2, 3 befindet sich ein Wagen 7, der auf Schienen 8 parallel zu den beiden Schweißmaschinen 2, 3 verfahrbar ist. Dieser Wagen 7 nimmt einen Schlitten 9 auf, der über eine Führung in Richtung des Doppelpfeiles 10 verschiebbar ist. Für das Verfahren des Wagens 7 und des Schlittens 9 sind entsprechende, in der Zeichnung nicht dargestellte Antriebe vorgesehen.

Der Schlitten 9 trägt eine senkrechte Führungsschiene 11, die in diesem Ausführungsbeispiel, wie die Fig. 2 erkennen läßt, ebenfalls eine leicht geneigte Lage einnimmt. Dabei entspricht die Neigung der Führungsschiene 11 genau der Schräglage des Rahmens 6 in den Schweißköpfen 4a-4b. Auf dieser Führungsschiene sind in an sich bekannter, nicht dargestellter Weise zwei mit Abstand voneinander angeordnete Greifer 12, 13 heb- und senkbar angeordnet, wobei der untere Greifer 12 nur eine verhältnismäßig kurze Hubbewegung ausführt, während über den oberen Greifer 13 die unterschiedliche Höhe der unterschiedlichen Rahmen 6 ausgeglichen wird. Jeder Greifer 12, 13 ist mit einem Greifarm 14 bestückt, der über eine nicht dargestellte Kolbenzylindereinheit verschoben werden kann.

Für die Entnahme eines fertig geschweißten Rahmens 6 aus der Schweißmaschine 3 wird nun der Schlitten 9 auf dem Wagen 7 derart verschoben, daß sich die beiden Greifer 12, 13 jeweils unterhalb eines Rahmenteiles befinden. Jetzt werden beide Greifer 12 geringfügig nach oben bewegt, bis die Rahmenteile auf den Greifarmen 14 aufliegen. Sobald dies sichergestellt ist, werden die Schweißköpfe 4a-4d so weit auseinandergefahren, daß der fertig geschweißte Rahmen 6 vollkommen frei ist und nur von den Greifarmen 14 gehalten wird. Über die Greifarme 14 kann nun der Rahmen 6 auf den Greifern 12, 13 festgespannt werden. Sobald dies geschehen ist, wird der Schlitten 9 wieder nach hinten bewegt und damit der fertig geschweißte Rahmen 6 aus der Schweißmaschine 3 herausbewegt, die jetzt sofort zur Bestückung mit Kunststoffprofilstücken zur Bildung eines weiteren Rahmens 6 bereit ist.

Der aus der Schweißmaschine 3 entnommene Rahmen 6 wird nun über den Schlitten 9 mit den Greifern 12, 13 in den Bereich einer nur angedeuteten Transporteinrichtung 15 bewegt. Diese Transporteinrichtung 15 ist für eine Bewegung des Schlittens 9 mit der Führungsschiene 11 unterbrochen, so daß der fertig geschweißte Rahmen 6 auf die Transporteinrichtung 15 bewegt und dort beispielsweise auf einem nur angedeuteten Transportband 16 abgesetzt werden kann. Dazu werden selbstverständlich die Greifarme 14 geöffnet und die Greifer 12, 13 abgesenkt. Jetzt wird der Schlitten 9 mit seiner Führungsschiene 11 noch um ein geringes Maß weiter zurückbewegt, so daß der jetzt auf der Transporteinrichtung 15 befindliche Rahmen 6 in seiner Ebene ohne Beeinträchtigung durch die Greifer 12, 13 abtransportiert und beispielsweise einer Putzmaschine zugeführt werden kann. Jetzt kehrt der Schlitten 9 mit seiner Führungsschiene 11 wieder in die gezeichnete Ausgangslage gemäß Fig. 1 zurück. Während der Bewegung des Rahmens 6 aus der Schweißmaschine 3 und dessen Übergabe an die Transporteinrichtung 15 ist der in der Schweißmaschine 2 hergestellte Rahmen 6 fertig und so weit abgekühlt, daß er herausgenommen werden kann. Jetzt wird der Wagen 7 auf der Führung 8 gemäß der Fig. 1 so weit nach links verfahren, daß jetzt der in der Schweißmaschine 2 gebildete Rahmen 6 über die Greifer 12, 13 ebenfalls nach hinten entnommen und an die Transporteinrichtung 15 abgegeben werden kann.

Das Herausnehmen der fertig geschweißten Rahmen 6 in der erläuterten Weise ist selbstverständlich auch dann möglich, wenn nur eine Schweißmaschine 2 oder 3 vorhanden ist. Bedarfsweise können die fertig geschweißten Rahmen 6 auch ohne den Einsatz von verfahrbaren Greifern 12, 13 an die Transporteinrichtung 15 übergeben werden. Dabei ist es zunächst erforderlich, daß die Transporteinrichtung 15 nur mit geringem Abstand hinter den Schweißmaschinen 2, 3 angeordnet ist. Es sind lediglich leicht geneigte Führungsleisten vorzusehen, die den fertigen Rahmen 6 bei der Übergabe an die Transporteinrichtung 15 kurzzeitig abstützen. Eine andere Möglichkeit zur Übergabe der Rahmen 6 an die Transporteinrichtung 15 besteht darin, hinter den Schweißmaschinen 2,3 einen Kipptisch vorzusehen, der die geschweißten Rahmen 6 in eine horizontale Lage kippt. Die Transporteinrichtung 15 muß jedoch dann als horizontale Transporteinrichtung ausgebildet sein. Ferner ist es möglich, die Schweißköpfe 4a-4d in einem sogenannten Portal anzuordnen, welches ebenfalls eine Entnahme der fertig geschweißten Rahmen 6 nach hinten ermöglicht, oder als sogenannte Doppelschweißköpfe auszubilden. Letzteres bedeutet, daß in einer Schweißmaschine 2,3 gleichzeitig zwei Rahmen 6 geschweißt werden können.

## Patentansprüche

1. Verfahren zur Herstellung von rechteckigen Rahmen, beispielsweise Flügel- und Blendrahmen von Fenstern, aus Kunststoff, bei dem jeweils vier an den Stirnflächen unter Gehrung auf Länge zugeschnittene Kunststoffprofilstücke unter Verwendung von Schweißbeilagen von der Bedienungsseite aus in mindestens eine mit vier relativ gegeneinander bewegbaren Schweißköpfen bestückte, senkrecht bzw. annähernd senkrecht arbeitende Schweißmaschine eingelegt, festgespannt, gleichzeitig an allen Gehrungsflächen erwärmt und dann unter Druck und Bildung von Schweißraupen zu einem geschlossenen Rahmen zusammengefügt werden und beidem anschließend der Rahmen nach dem Auseinanderfahren der Schweißköpfe aus der Einspannebene herausbewegt und an eine Transporteinrichtung übergeben wird,
dadurch gekennzeichnet,
daß der geschweißte Rahmen an der der Bedienungsseite abgewandten Seite der Schweißmaschine herausbewegt wird.

2. Verfahren nach Anspruch 1,
daß der geschweißte Rahmen an einen Kipptisch übergeben, in die horizontale Lage gekippt und dann an eine horizontale Transporteinrichtung übergeben wird.

3. Verfahren nach Anspruch 1,
dadurch gekennzeichnet,
daß der geschweißte Rahmen direkt an eine vertikale bzw. annähernd vertikale Transporteinrichtung verschoben wird.

4. Verfahren nach Anspruch 1,
dadurch gekennzeichnet,
daß der geschweißte Rahmen zunächst von einem Greifer erfaßt, dann parallel in seiner Ebene verfahren und schließlich an eine vertikale bzw. annähernd vertikale Transporteinrichtung übergeben wird.

5. Verfahren nach einem der Ansprüche 1 bis 4,
dadurch gekennzeichnet,
daß die geschweißten Rahmen wechselweise aus zwei mit Abstand nebeneinander angeordneten Schweißmaschinen herausbewegt werden.

6. Vorrichtung zur Herstellung von rechteckigen Rahmen, beispielsweise Flügel- und Blendrahmen von Fenstern, aus Kunststoff, insbesondere zur Durchführung des Verfahrens nach einem der Ansprüche 1 bis 5, bestehend aus mindestens einer senkrecht bzw. annähernd senkrecht arbeitenden, mit vier relativ gegeneinander bewegbaren Schweißköpfen bestückten Schweißmaschine und einer Transporteinrichtung,
dadurch gekennzeichnet,
daß die Transporteinrichtung direkt hinter der Schweißmaschine angeordnet und der Schweißmaschine eine Übergabeeinheit für den geschweißten Rahmen zugeordnet ist.

7. Vorrichtung nach Anspruch 6,
dadurch gekennzeichnet,
daß die Übergabeeinheit als Kipptisch ausgebildet ist.

8. Vorrichtung nach Anspruch 6,
dadurch gekennzeichnet,
daß die Übergabeeinheit aus einem an der Rückseite der Schweißmaschine (2,3) auf Führungen verfahrbaren Greifer (12,13) gebildet ist.

9. Vorrichtung nach Anspruch 8,
dadurch gekennzeichnet,
daß der Greifer (12,13) auf einem quer verfahrbaren Schlitten (9) angeordnet ist.

10. Vorrichtung nach Anspruch 8 oder 9,
dadurch gekennzeichnet,
daß die Transporteinrichtung (15) eine Aussparung für den quer verschiebbaren Greifer (12,13) aufweist.

11. Vorrichtung nach Anspruch 6,
dadurch gekennzeichnet,
daß die vier Schweißköpfe (4a bis 4d) der Schweißmaschine (2,3) an einem Portal angeordnet sind.

12. Vorrichtung nach Anspruch 6,
dadurch gekennzeichnet,
daß zumindest zwei Schweißköpfe (4a,4b) der Schweißmaschine (2,3) auf einem verfahrbaren Schlitten (5) angeordnet sind.

13. Vorrichtung nach mindestens einem der Ansprüche 6-12,
dadurch gekennzeichnet,
daß zwei Schweißmaschinen (2,3) nebeneinander angeordnet sid und beiden Schweißmaschinen (2,3) eine gemeinsame Transporteinrichtung (15) und eine Übergabeeinheit zugeordnet ist.

14. Vorrichtung nach mindestens einem der Ansprüche 6-13,
dadurch gekennzeichnet,
daß jeder Schweißkopf (4a bis 4d) als Doppelschweißkopf ausgebildet ist.
